# EUROPEAN PATENT APPLICATION

(11) **EP 1 821 533 A1**
(43) Date of publication of application: **22.08.2007**
(21) Application number: 06003271.1
(22) Date of filing: 17.02.2006
(51) Int. Cl.: H04N 5/74

(54) **Method for displaying data**

(71) Applicant: Sony Deutschland GmbH, 10785 Berlin (DE)
(72) Inventor: Ludley, Frederic, 70327 Stuttgart (DE); Zoidis, Evangelos, c/o SONY Deutschland GmbH, 70327 Stuttgart (DE)
(74) Representative: Müller - Hoffmann & Partner

(57) **Abstract**

A method for optically displaying data is provided, wherein a process of navigating through an embedding information/dataset is realized and wherein the process of navigating through said embedding information/dataset (EDS) is initiated, con-trolled and/or stopped by or in response of at least one of the actions of moving, accelerating, tilting, positioning, orienting, and/or operating a provided control means or control device (C).

## Description

The present invention relates to a method for optically displaying data and in particular to a method for virtually optically navigating for hand-held projection devices.

Nowadays the projection and display of information becomes more and more important. In particular in cases where small and compact mobile optical displays or mobile optical devices are used it is sometimes not easy to display and emphasize data contents contained in a large embedding information/dataset.

It is an object of the present invention to provide a method for optically displaying data which is capable of reliably and conveniently display selected amounts of data contained in an large embedding information/dataset.

The object underlying the present invention is achieved by a method for optically displaying data according to the features of independent claim 1. Preferred embodiments of the inventive method for optically displaying data are within the scope of the dependent sub-claims.

It is in particular an additional or alternative goal of the present invention to provide a man machine interface structure and/or method with or for projection capabilities which have and/or realize optical features and/or means for an interaction with users.

The method for optically displaying data according to the present invention comprises steps of receiving, generating, and/or providing an embedding information/dataset, selecting at least a portion or subset of said embedding information/dataset as a projection information/dataset, and optically projecting and displaying an image which is representative for said selected projection information/dataset and thereby displaying information content in or represented by said selected projection information/dataset. According to the present invention additionally a process of navigating through said embedding information/dataset is provided. Based on said process of navigating a selection of said projection information/dataset can be made and/or can be changed in a controlled manner. Additionally, based on said selection the projection and display of the image can be selected and/or adapted accordingly in a controlled manner. It is a further aspect of the present invention that said process of navigating can be initiated, controlled, and/or stopped by or in response of at least one of the actions of moving, accelerating, tilting, positioning, orienting, and/or by operating a provided control means or control device.

It is therefore a basic aspect of the present invention to enable a provided process of navigating through a given embedding information/dataset to be initiated, controlled and/or stopped by or in response of at least one action which is performed on or with a control device. Thereby the process of navigating through the dataset or information set which embeds the projected information can be realized in a simple, convenient, and reliable manner.

According to a preferred embodiment of the present invention a control means or control device is employed which is a projection device or a part thereof. Alternatively, a control means or control device may be employed which comprises a projection device.

In this case it is of particular advantage to employ a mobile optical device or mobile optical display as said projection device.

According to another additional or alternative embodiment of the present invention a projection screen or a plurality of projection screens for displaying contents are employed and the mentioned actions of moving, accelerating, tilting, positioning, orienting and their affect are determined and/or measured and thereby monitored or supervised with respect to said projection screen or with respect to said plurality of projection screens. That means, that for instance a movement, acceleration, tilt, position and/or orientation of the control means or control device may be defined or set in relation to the respective projection screen or plurality of projection screens.

It is of further advantage to have said process of navigating comprise a sub-process of shifting, moving, rotating and/or zooming off or within the embedding information/dataset corresponding to a respective shifting, moving, rotating, and/or zooming of the respective image content of the displayed image.

A particular convenient image display is achieved in the case that the image displayed is displayed as a fixed image with respect to its extension and/or with respect to its orientation, in particular with respect to said display screen or the plurality of display screens.

According to a further preferred embodiment of the present invention display information and/or navigation information may be provided, generated and/or displayed as an additional image or as an alternate image as additional information.

In this case said additional information or a part thereof and the respective additional or alternate image may be projected and/or displayed as one or a plurality of partial images of said image corresponding to the selected projection information/dataset.

Preferably said additional information or a part thereof and the respective additional or alternate image may be projected and/or displayed as one or a plurality of superimposed partial images of said image corresponding to said selected projection information/ dataset.

Further, said additional information or a part thereof and the respective additional or alternative image may be projected and/or displayed as one or a plurality of embedded partial images of said image of said selected projection information / dataset.

It is of further advantage to project and/or to display said additional information or a part thereof and the respective additional or alternate image as one or as a plurality of additional partial images of said image corresponding to the selected projection information/ dataset.

According to a further and advantageous preferred embodiment of the present invention said additional information or a part thereof and the respective additional or alternate image may use or comprise one or a plurality of an image of another portion/subset of said embedding information/dataset, in particular on an enlarged scale and/or embedding the displayed selected projection information/dataset and the respective image thereof.

Additionally or alternatively, said additional information or a part thereof and the respective additional or alternate image are or comprise one or a plurality of projected holograms, in particular of projected holographic grids, lattices or gratings.

Further in addition or alternatively said additional information or a part thereof and the respective additional or alternate image may be or may use one or a plurality of laser pointer elements, in particular in the holographic grid, lattice, or grating.

It is further preferred to display the additional information and the respective image thereof in a sequential mode as an alternate image for said image of or for said selected projection information/dataset.

Alternatively said additional information and the respective image thereof may be displayed in an embedded mode as an simultaneous image to said image for said selected projection information/dataset or a part thereof.

The display of the additional information or a part thereof and the respective additional or alternate image thereof may be realized by software and a respective computer program.

Additionally or alternatively, the display of said additional information or a part thereof and the respective additional or alternate image may be realized by respective projection or projecting hardware and/or by respective electronic hardware, e.g. by respective ASICs or the like.

It is further of advantage to employ a control device or control means which has a navigation button and to realize the process of navigating or navigation or a part thereof at least in part by operating said navigation button.

Additionally or alternatively a control device or control means may be used which comprises a superposition button in order to realize the process of displaying said additional information or a part thereof and the respective additional or alternate image at least in part by operating said superposition button.

Further in addition or further alternatively, a projection device may be used which has at least two uncoupled projectors for displaying said image and said additional information or a part thereof, and the respective additional or alternate image, respectively, in particular as separate or as embedded images.

Alternatively, a projection device may be used which comprises a single and coupled projector only.

Further additionally or alternatively a projection device may be used which comprises one or a plurality or any combination of semiconductor based light sources, light emitting diodes, laser diodes, micro-displays, and diffractive elements.

Additionally or alternatively, the inventive method may be designed and/or may employ means in order to realize a double or hybrid functionality of optically projecting image data and of enabling an interaction with users.

The inventive method may be designed and/or may employ means in order to realize one or a plurality of processes of the group which comprises stabilizing an image and focussing an image.

The inventive method may be designed and/or may employ means in order to realize one or a plurality of processes of the group which comprises measuring the distance to an optically projected image and measuring the orientation to an optically projected image.

These and further aspects of the present invention will be elucidated in more detail by taking reference to the following remarks:

The present invention inter alia relates to virtual optical navigation in particular for handheld projection devices.

The development of projectors to more compact and light weight devices, by using semiconductor light sources is becoming an industry trend. At the same time their mass consumer applications will allow portability and mobile use of such handhold optical devices. For applications such web browsing or similar, where information content challenges high resolution, it is not possible to physically afford that demand on projection distances for personal use. It is therefore necessary to spotlight information and navigate accordingly through the information labyrinth. Obviously, there are two ways to do so, either moving the device across a screen to dynamically navigate or simply holding the device to project and virtually navigate into the content.

There is a series of shortcomings and additional sensing/optical challenges to be addressed in the first case of dynamic navigation ("Tennis Ball" effect, needs large screen, Auto focus, Movement sensors, picture distortions etc). The second way of virtual navigation is preferred for the above reasons, whereas the virtual navigation itself is proposed to be solved, by either sequential or embedded information directly driven by the micro display or optically using laser pointer or a diffractive holographic element, which is integrated in the optical engine of the handheld projector.

Moving the handheld projector device, in order to dynamically navigate the display information on the screen, dependent on the micro display resolution and information content, which proportional to the lateral movement distance, the virtual display screen can be of the order of few meters :
- Firstly, one disadvantage in this case is to find appropriate large screen to project scrolling image, something which naturally is difficult for mobile application.
- Secondly and most important, is the fact that by moving the handhold mobile projector, one need to move permanently the head towards the position of the display ("Tennis Ball" effect).
- At relatively short display distances the auto focus becomes an optical challenge to compensate the effect during movement.

Also by using the handhold device an accurate movement sensor is required, in order to compensate by software and/or by electronic hardware means any picture distortions. Also a sensor may be employed in order to stabilize the projected image.

A new man machine interface is needed for a proper interaction technique. The mobile projection forces similar problems as PDA devices, portable devices, smart phones or the like:
- no or small keyboards,
- navigation through the World Wide Web,
- handling of different Information at the same time,
- orientation of program level, and
- handling content (maps).

The Mobile Optical Display is consists of a navigation button. By pushing the Navigation Button, one can move the display in all four directions (up, down, right, left). Zooming in and out may also made be possible. At the same time the trajectory of the movement is recorded and calculated. Therefore the Navigation Button deals at same time as a movement sensor. At any time the calculated trajectory can be corresponded to the boundary frame of the complete map. By pushing the button a laser pointer can be activated to indicate current virtual navigation position. Further, inside the MOD or mobile optical display the optical engine accommodates an additional optical arrangement to generate a hologram, which separately can be projected for example by pushing the superposition button.

The superimposed Navigation can be applied to any kind of stationary or mobile projector. As additional advantage the four point distance and stabilization measurement, can be easily implemented to the projector remote control or the handhold mobile projector.

In the following the different ways are explained on how to virtually navigate on mobile projection device :

### Micro Display Navigation (Using Navigation Button)

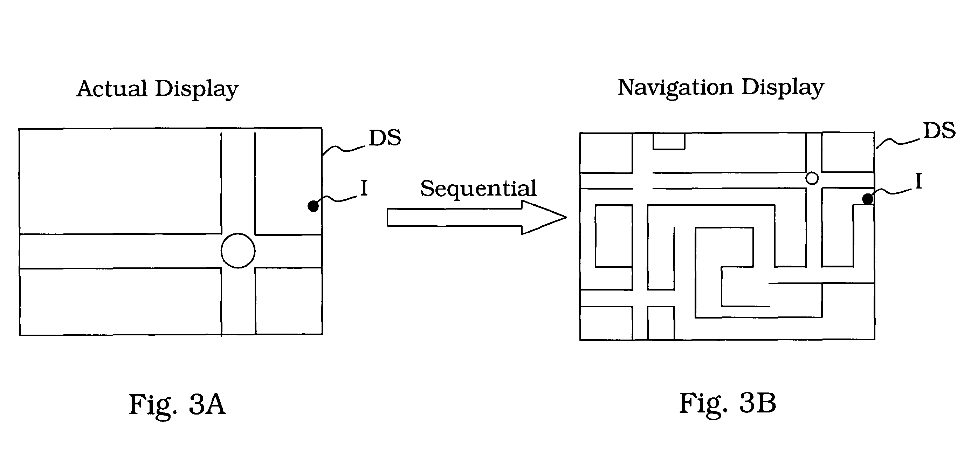

### 1. Sequential Image Navigation as shown in Figs. 3A and 3B.

In the Sequential Image Navigation, the micro display itself is used to display the full map image of the Virtual Navigation after pushing the Navigation Button. That means, user can only navigate himself at a different point of time.

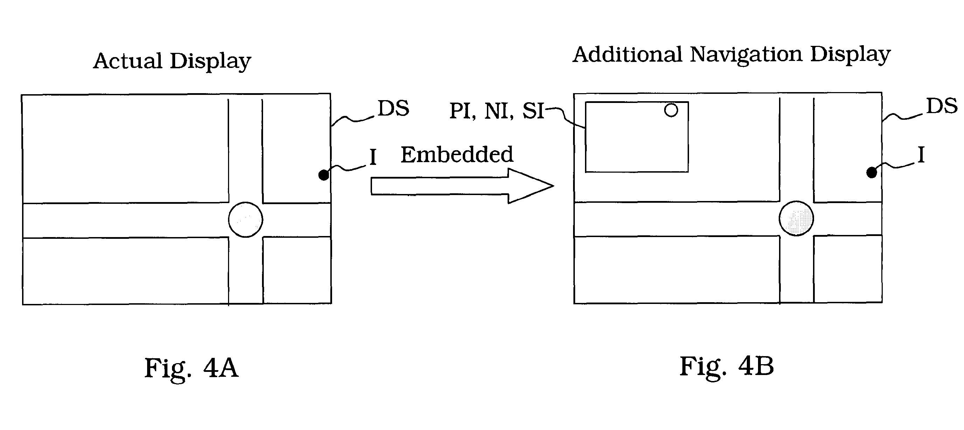

### 2. Embedded Image Navigation as shown in Figs. 4A and 4B.

In the Embedded Image Navigation, the micro display itself is used to display the full map image of the Virtual Navigation, which appears to be embedded in the enlarged display. This also can appear by pushing the Navigation Button

### Superposition Optical Navigation (Superposition Button)

Due to the low resolution capabilities to read information in the sequential and embedded micro display navigation, another optical way is proposed :

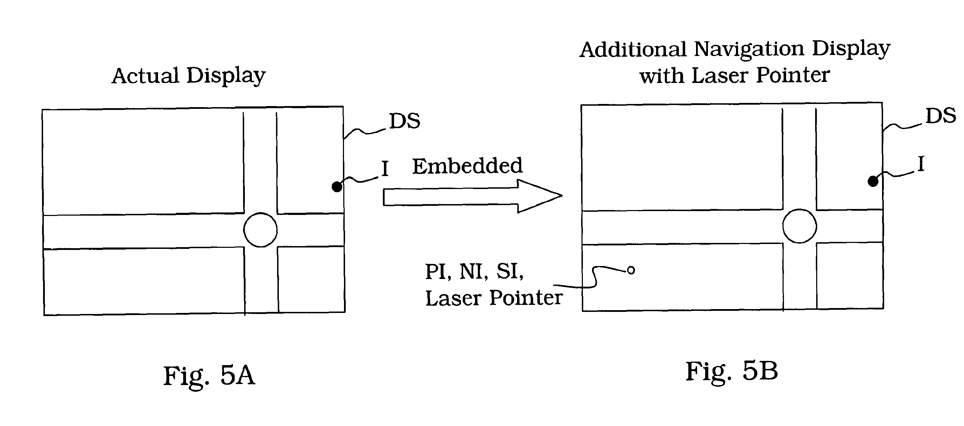

### 1. Superimposed Laser Pointer (Figs. 5A and 5B)

In simplest case by pushing the Superposition Button a laser pointer is activated to indicate virtual position on screen. In this case the navigation button trajectory is referred to the frame of the micro display.

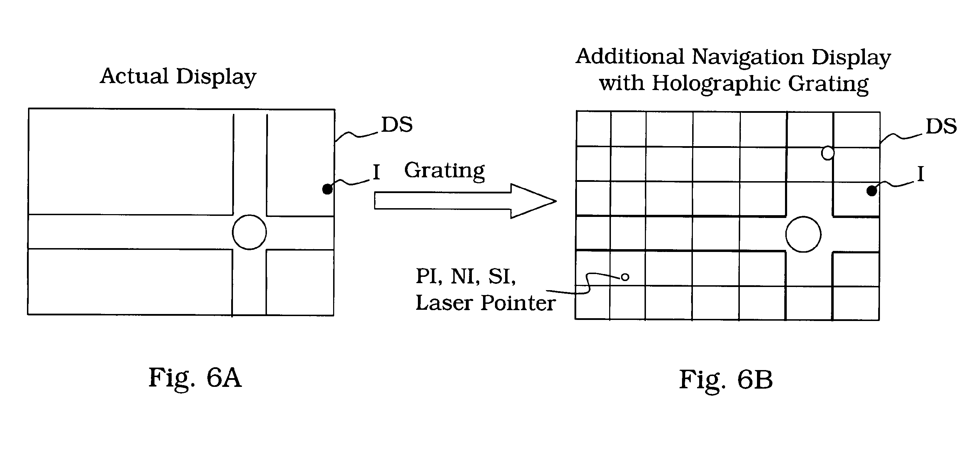

### 2. Superimposed Grating Hologram (Figs. 6A and 6B)

Using a semiconductor based light source, such as a laser diode or LED light source, a holographic diffractive element can be illuminated to create an image, which can be superimposed on the display by pushing the superposition button.

Additional functional features, which can be realized using the hologram designed with an additional infrared illumination beam and a depth camera are :
1. The four point distance measurement for auto focussing.
2. The four point optical stabilization measurement for accurate positioning of the virtual navigation.

### Design of the Optical Engine for the illumination of the Diffractive Hologram:

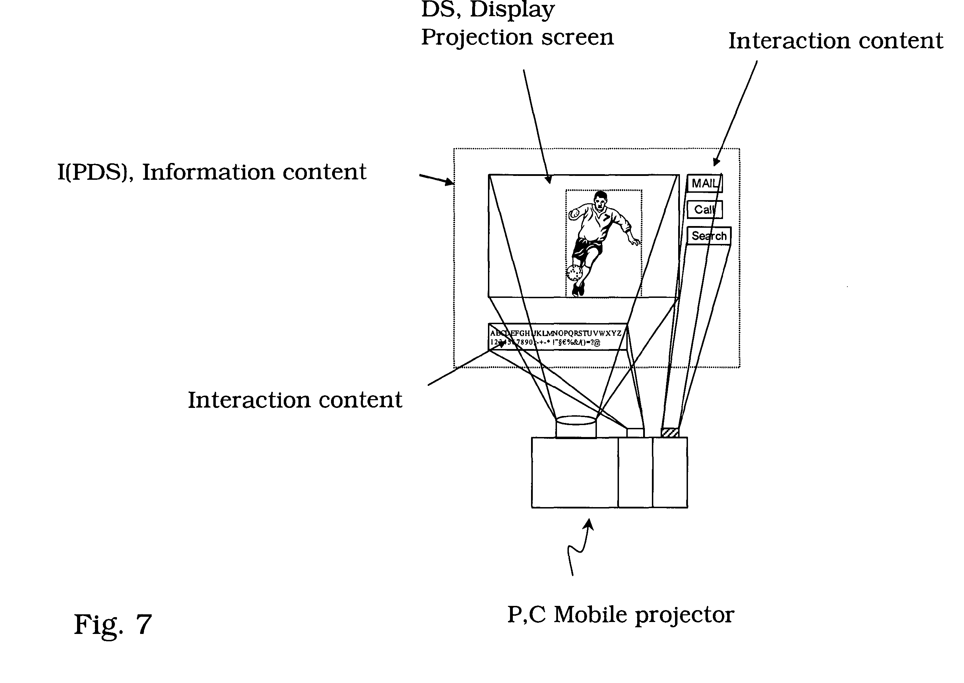

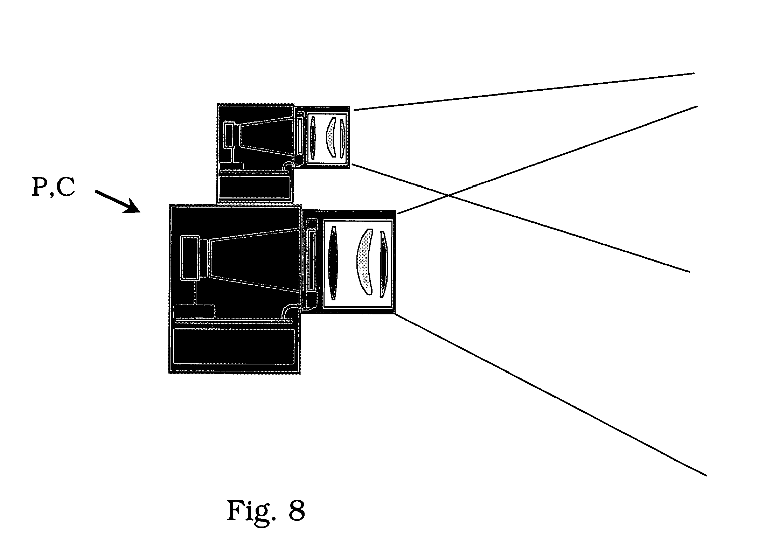

Proposed content viewer (Fig. 7 and 8)

The proposed content viewer enables displaying of separated images and the way of displaying two different images can be done by several approaches, e. g. by using two projectors. The principle may be to use two optical engines to project the separated images.

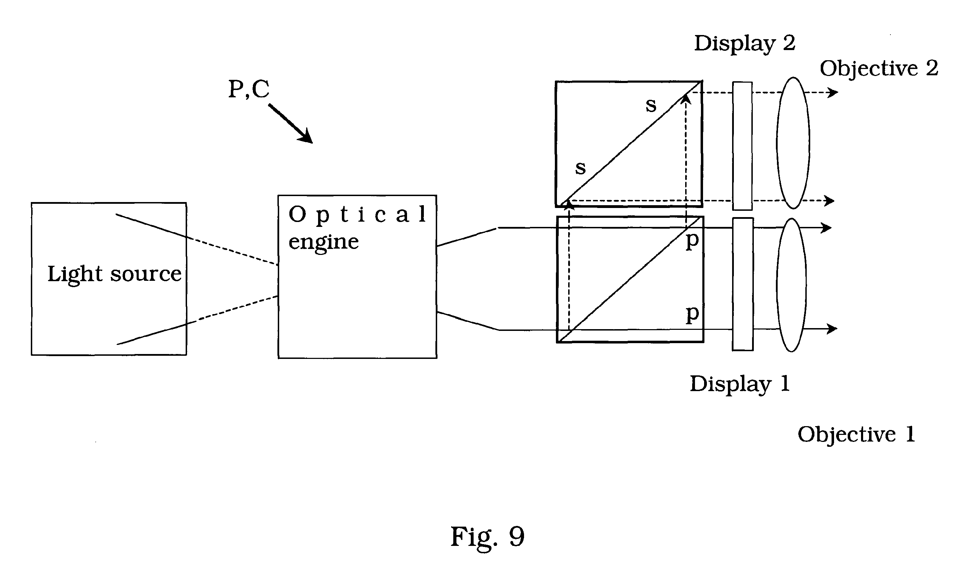

In T-LCD projectors is, that polarized light is used. This can be used to use s and p polarization to display different images. The p polarized light goes to a beam splitter. The s polarized light is turned to 45° and is used to illuminate an other display: see Fig. 9.

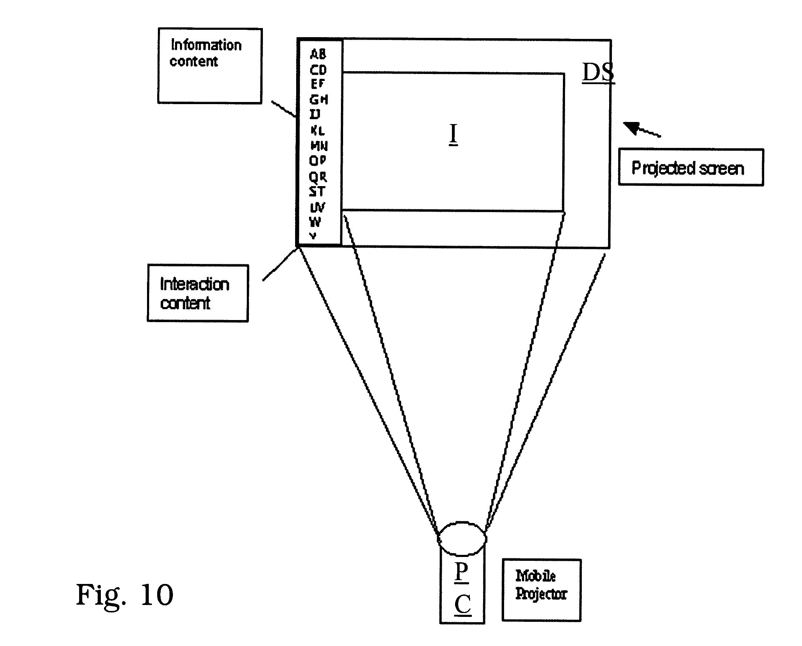

### Extended Picture (Figs. 9 and 10)

The extended picture can be done by a bigger display illuminating with the one light source not the full surface, but the centre and with the second light source the side images.

The light sources can be UHP lamps, LED, VCELS, laser type light sources. The panel type can by T-LCD displays, either LCOS or MEMS displays. For simple images diffractive elements can be used.

The invention will further be explained bases on preferred embodiments thereof and taking reference to the accompanying figures.
- **Fig. 1**: is a schematical block diagram elucidating basic principles of the present invention.
- **Fig. 2**: is a schematical block diagram elucidating aspects of an embodiment of the present invention.
- **Fig. 3A - 6B**: are schematical diagrams elucidating display properties of embodiments of the present invention.
- **Fig. 7 - 10**: demonstrate different projection schemes in a schematical way which can be employed by embodiments of the present invention.

In the following similar elements and structures with respect to their functionality and construction are denoted by the same reference symbols. A detailed description is not repeated in each case of their occurrence.

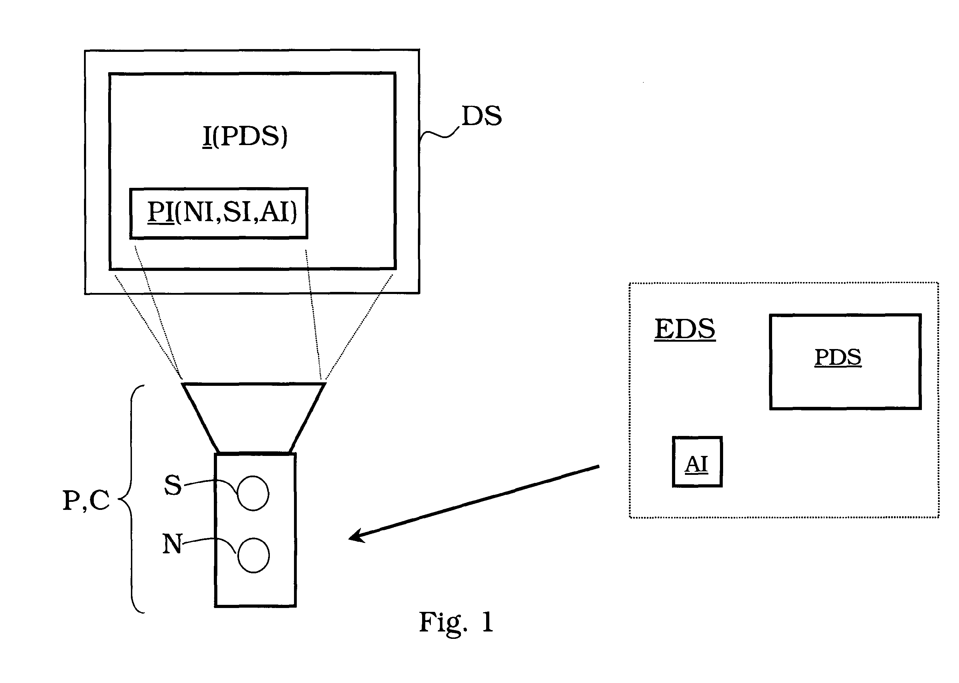

Fig. 1 is a schematical block diagram for elucidating the basic ideas behind the present invention.

According to the inventive method for displaying data an embedding and global information/dataset EDS is provided which is or contains information which can be optically displayed. Within the embedding information/dataset EDS according to the present invention a particular projection information/dataset PDS is selected which or the contents of which has to be displayed on a display screen DS. Therefore respective control information is provided to a given control device C which includes a projector P. According to the operation of the control means C and the projector P based on the information content of the selected projection information/dataset PDS embedded in said embedding information/dataset EDS a respective image I is generated as a function of the information contained in said selected projection information/dataset PDS on said projection screen S.

According to the present invention upon operation of a superposition button S provided as a part of said control means C additional information AI or the content thereof may be displayed on said screen S also be the operation of the projector P. In the case shown in Fig. 1 said information content of the additional information AI is displayed as a superimposed image SI within the area occupied by the image I (PDS) and is a function of the additional information AI which is in the case of Fig. 1 a part of said embedding information/dataset as well as in part generated by the control means C, for instance in the sense of navigation information NI.

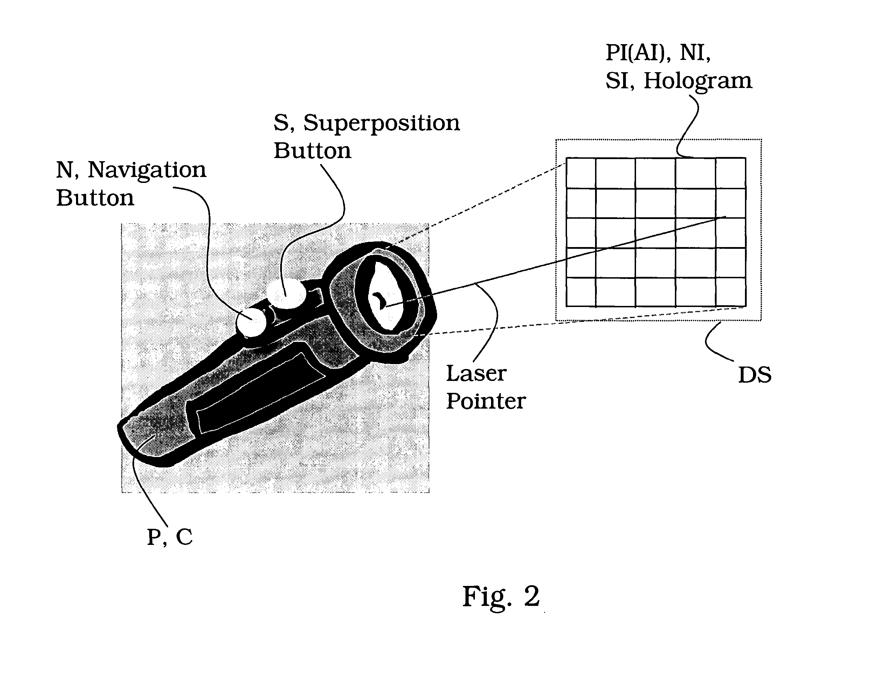

Figs. 2 to 10 have already been described above.

### Reference Symbols

- **AI**: additional information
- **C**: control means, control device
- **DI**: display information
- **DS**: display screen
- **EDS**: embedding/ global information/ dataset
- **I**: information
- **N**: navigation button
- **NI**: navigation information
- **P**: projector, projection means, projection device
- **PDS**: projection information/dataset
- **PI**: partial image
- **S**: superposition button
- **SI**: superposition information, superimposed image

## Claims

1. Method for optically displaying data, comprising steps of:
- receiving, generating, and/or providing an embedding information/data set (EDS),
- selecting at least a portion/subset of said embedding information/data set (EDS) as a projection information/ data set (PDS), and
- optically projecting and displaying an image (I) being representative for said selected projection information/data set (PDS) thereby displaying information contained in or represented by said selected projection information/data set (PDS),
- wherein a process of navigating through said embedding information/data set (EDS) is provided, based on which a selection of said projection information/data set (PDS) can be made and/or can be changed in a controlled manner and based on which the projection and display of the image (I) can be selected and/or adapted accordingly in a controlled manner, and
- wherein said process of navigating is initiated, controlled, and/or stopped by or in response of at least one of the actions of moving, accelerating, tilting, positioning, orienting, and/or operating a provided control means or control device (C).

2. Method according to claim 1,
wherein a control means or control device (C) is employed which is a projection device (P) or a part thereof or which comprises a projection device (P).

3. Method according to claim 2,
wherein a mobile optical device or mobile optical display is used as said projection device (P).

4. Method according to any one of the preceding claims,
- wherein a projection screen (S) or a plurality of projection screens for displaying contents are employed and
- wherein said actions of moving, accelerating, tilting, positioning, orienting are determined and/or measured with respect to said projection screen (S) or with respect to said plurality of projection screens.

5. Method according to any one of the preceding claims,
wherein the process of navigating comprises a sub-process of shifting, moving, rotating and/or zooming off or within the embedding information/data set (EDS) corresponding to a respective shifting, moving, rotating, and/or zooming of the respective image content of the displayed image (I).

6. Method according to any one of the preceding claims,
wherein the image (I) displayed is a fixed image with respect to its extension and/or orientation, in particular with respect to said display screen or the plurality of display screens.

7. Method according to any one of the preceding claims,
wherein display information (DI) and/or navigation information (NI) is provided, generated and/or displayed as an additional image or as an alternate image as additional information (AI).

8. Method according to claim 7,
wherein said additional information (AI) or a part thereof and the respective additional or alternate image are projected and/or displayed as one or a plurality of a partial image (PI) of said image (I).

9. Method according to any one of the preceding claims 7 or 8,
wherein said additional information (AI) or a part thereof and the respective additional or alternate image are projected and/or displayed as one or a plurality of a superimposed partial image (PI) of said image (I).

10. Method according to any one of the preceding claims 7 to 9,
wherein said additional information (AI) or a part thereof and the respective additional or alternate image are projected and/or displayed as one or a plurality of a embedded partial image (PI) of said image (I).

11. Method according to any one of the preceding claims 7 to 10,
wherein said additional information (AI) or a part thereof and the respective additional or alternate image are projected and/or displayed as one or a plurality of an additional partial image (PI) of said image (I).

12. Method according to any one of the preceding claims 7 to 11,
wherein said additional information (AI) or a part thereof and the respective additional or alternate image use or comprise one or a plurality of an image of another portion/subset of said embedding information/data set, in particular on an enlarged scale and/or embedding the displayed selected projection information/data set (PDS) and the respective image (I) thereof.

13. Method according to any one of the preceding claims 7 to 12,
wherein said additional information (AI) or a part thereof and the respective additional or alternate image are or comprise one or a plurality of projected holograms, in particular of projected holographic grids, lattices, or gratings.

14. Method according to any one of the preceding claims 7 to 13,
wherein said additional information (AI) or a part thereof and the respective additional or alternate image are or comprise one or a plurality of laser pointer elements, in particular of the holographic grid, lattice, or grating.

15. Method according to any one of the preceding claims 7 to 14,
wherein said additional information (AI) and the respective image thereof is displayed in a sequential mode as an alternate image for said image (I) of or for said selected projection information/dataset (PDS).

16. Method according to any one of the preceding claims 7 to 14,
wherein said additional information (AI) is displayed in an embedded mode as an simultaneous image to said image (I) for said selected projection information/dataset (PDS) or a part thereof.

17. Method according to any one of the preceding claims 7 to 16,
wherein the display of said additional information (AI) or a part thereof is realized by software and a respective computer program.

18. Method according to any one of the preceding claims 7 to 17,
wherein the display of said additional information (AI) or a part thereof is realized by projecting hardware and/or by respective electronic hardware, e.g. by respective ASICs or the like.

19. Method according to any one of the preceding claims,
- wherein a control device (C) is used having a navigation button (N) and
- wherein the process of navigating or a part thereof is at least in part realized by operating said navigation button (N).

20. Method according to any one of the preceding claims,
- wherein a control device (C) is used having a superposition button (S) and
- wherein the process of displaying said additional information (AI) or a part thereof or the respective additional or alternate image is at least in part realized by operating said superposition button (S).

21. Method according to any one of the preceding claims,
wherein a projection device (P) is used having at least two uncoupled projectors for displaying said image (I) and said additional information (AI) or a part thereof and the respective additional or alternate image, in particular as separate or as embedded images.

22. Method according to any one of the preceding claims 1 to 20,
wherein a projection device (P) is used having a single and coupled projected.

23. Method according to any one of the preceding claims,
wherein a projection device (P) is used comprising one or a plurality of semiconductor based light sources, light emitting diodes, laser diodes, micro-displays and diffractive elements.

24. Method according to any one of the preceding claims,
which is designed and/or which employs means in order to realize a double or hybrid functionality of optically projecting image data and of enabling an interaction with users.

25. Method according to any one of the preceding claims,
which is designed and/or which employs means in order to realize one or a plurality of processes of the group which comprises
- stabilizing an image (I) and
- focussing an image (I).

26. Method according to any one of the preceding claims,
which is designed and/or which employs means in order to realize one or a plurality of processes of the group which comprises
- measuring the distance to an optically projected image (I) and
- measuring the orientation to an optically projected image (I).
